# EUROPÄISCHE PATENTSCHRIFT

(11) **EP 2 764 806 B1**
(45) Veröffentlichungstag und Bekanntmachung des Hinweises auf die Patenterteilung: **06.01.2016**
(21) Anmeldenummer: 14150484.5
(22) Anmeldetag: 08.01.2014
(51) Int. Cl.: A47J 31/52

(54) **Verfahren zum Überwachen und/oder Steuern eines Getränkebereiters sowie Getränkebereiter zur Durchführung des Verfahrens**
Method for monitoring and/or controlling a beverage-making machine and beverage-making machine for carrying out the method
Procédé de surveillance et/ou de commande d'un appareil de préparation de boissons et appareil de préparation de boissons destiné à mettre en oeuvre le procédé

(30) Priorität: 12.02.2013 CH 4392013
(43) Veröffentlichungstag der Anmeldung: 13.08.2014
(73) Patentinhaber: WMF WÜRTTEMBERGISCHE METALLWARENFABRIK AG, 73309 Geislingen/Steige (DE)
(72) Erfinder: Dollner, Sander, 89233 Neu-Ulm (DE); Startz, Armin, 89197 Weidenstetten (DE)
(74) Vertreter: BRP Renaud & Partner mbB Rechtsanwälte Patentanwälte Steuerberater

(56) Entgegenhaltungen:
- EP-A1- 1 707 089
- DE-A1- 10 204 455
- DE-A1-102007 058 936

## Beschreibung

### TECHNISCHES GEBIET

Die vorliegende Erfindung bezieht sich auf das Gebiet der Getränkebereiter. Sie betrifft ein Verfahren zum Überwachen und/oder Steuern eines Getränkebereiters gemäss dem Oberbegriff des Anspruchs 1. Sie betrifft weiterhin einen Getränkeautomaten zur Durchführung des Verfahrens.

### STAND DER TECHNIK

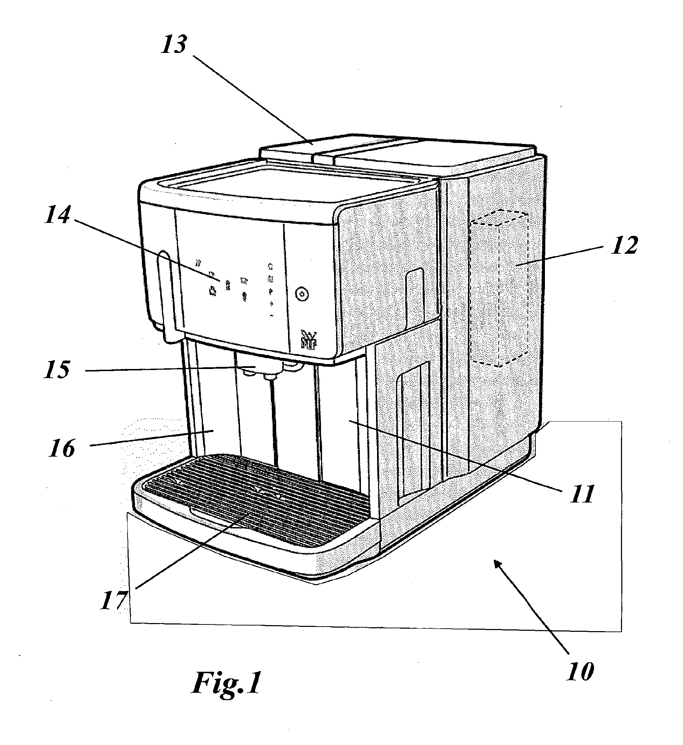

In Fig. 1 ist als Beispiel für einen Getränkebereiter ein Kaffeevollautomat 10 in perspektivischer Aussenansicht wiedergegeben. Der Kaffeevollautomat 10 ist in diesem Fall als Tischgerät ausgebildet und weist über einer an der Vorderseite angeordneten Tropfschale 17 einen Auslauf 15 für das Kaffeegetränk auf. Oberhalb vom Auslauf 15 ist eine Bedien- und Anzeigeeinheit 14 angeordnet, an der Befehle eingegeben und Zustände der Maschine angezeigt werden können. Im hinteren Bereich ist links der von oben zugängliche Bohnenbehälter 13 über der (nicht gezeigten) Kaffeemühle positioniert. Rechts davon befindet sich im Inneren der Maschine eine Brüheinheit 12, in der mit dem aus der Kaffeemühle kommenden Kaffeepulver unter Einsatz von heissem Wasser das gewünschte Kaffeegetränk gebrüht und zum Auslauf 15 geleitet wird. Für die Aufnahme des entstehenden Kaffeesatzes ist ein herausnehmbarer Satzbehälter 16 vorgesehen. Das für den Brühvorgang benötigte Wasser wird in einem ebenfalls herausnehmbaren Wassertank 11 vorgehalten. Zusätzlich können Dampfdüsen, Aufschäumlanzen zum externen Aufschäumen von Milch, sowie Heisswasserausläufe für die Zubereitung von Tee oder dgl. vorhanden sein. Die für das Zubereiten von Cappuccino oder dgl. benötigte Milch kann beispielsweise durch einen Ansaugschlauch zugeführt werden, der in einen externen Milchbehälter eintaucht.

Die Erfassung des Betriebszustandes eines solchen Getränkebereiters (Kaffeevollautomaten), sowie die Erkennung, ob eine Abweichung oder Fehler auftritt, erfordert üblicherweise eine Vielzahl der unterschiedlichsten Sensoren in der Maschine. Diese müssen über die Maschinensteuerung erfasst und ausgewertet werden.

Zur Steuerung, Überwachung und Fehlererkennung der Maschinen kommen im Stand der Technik Mikroschalter, Reedschalter, Hallsensoren, Lichtschranken, Temperatursensoren, Durchflussmengenmesser, Kraftsensoren, Drucksensoren usw. an und in den verschiedenen Baugruppen des Getränkebereiters bzw. des Kaffeevollautomaten zum Einsatz.

Die Verwendung einer größeren Anzahl unterschiedlich wirkender und aufgebauter Sensoren bedeutet höhere Herstellkosten und einen erhöhten Montageaufwand. Zu den Sensoren kommen in der Regel noch entsprechende Befestigungsteile, eine elektrische Verbindung zu einer Auswerte- und Steuereinrichtung und in den meisten Fällen eine angepasste Stromversorgung für den Sensor hinzu. Mit der Anzahl der Teile und elektrischen Verbindungen steigen auch das Fehlerrisiko und die Ausfallwahrscheinlichkeit.

Bei Haushaltsgeräten ist des Öfteren vorgeschlagen worden, zur Steuerung und/oder Überwachung einzelner Vorgänge bzw. Funktionen Methoden der Geräuscherkennung einzusetzen.

Die Druckschrift DE 102 04 455 A1 offenbart ein Verfahren zur Beeinflussung und/oder Steuerung des Programmlaufs eines mit Geräusche erzeugenden Funktionseinheiten, wie Pumpen, Ventile und dergl. ausgestatteten Haushaltgerätes, insbesondere einer Geschirrspülmaschine, durch Auswertung von im Spülbetrieb abgefragten Sensorsignalen. Dabei werden vom Gerät erzeugte Betriebsgeräusche von einem oder mehreren akustischen Sensoren erfasst und es wird abhängig von den so ermittelten Geräuschmustern ein Einfluss auf den Spülprogrammlauf genommen. Alternativ können die Geräuschmuster zur Defekterkennung von Maschinenkomponenten herangezogen werden.

Die Druckschrift DE 10 2007 058 936 A1 offenbart ein Verfahren zur Erzeugung eines Ausgangssignals für ein Haushaltsgerät, wobei anhand mindestens eines akustischen Sensors ein Geräusch des Haushaltsgeräts erfasst wird, das erfasste Geräusch erkannt wird, und abhängig von dem erkannten Geräusch ein Ausgangssignal erzeugt wird. Das erfasste Geräusch wird vorzugsweise mit mindestens einem hinterlegten Geräusch verglichen und dasjenige Geräusch erkannt, das dem erfassten Geräusch am nächsten kommt. Das Ausgangssignal wird zur Überwachung oder Auswertung von Abläufen und/oder Betriebszuständen des Haushaltsgeräts eingesetzt.

Aus der Druckschrift DE 196 38 355 A1 ist es bekannt, zur Steuerung eines Kochvorgangs auf einem Küchenherd das beim Kochvorgang entstehende Geräusch in einen unteren, niederfrequenten und einen oberen, hochfrequenten Bereich aufzuteilen, wobei in jedem Bereich entweder für die gesamte Bandbreite oder für mehrere Frequenzen und/oder kleinere Frequenzbereiche aus dem Frequenzspektrum die Amplituden gemessen werden. Jeweils aus den Amplituden des unteren und des oberen Frequenzbereiches wird ein Mittelwert gebildet. Die beiden errechneten Mittelwerte werden regelmässig miteinander verglichen, wobei in der Phase des Blasensiedens der Mittelwert des unteren Frequenzbereichs unterhalb des Mittelwerts des oberen Frequenzbereichs liegt, während es sich in der Phase des sprudelnden Kochens umgekehrt verhält. In der Aufheizphase wird nach dem Zeitpunkt, an dem der Mittelwert des unteren Frequenzbereichs den Mittelwert des oberen Frequenzbereichs übersteigt, die Energiezufuhr für die Heizvorrichtung unterbrochen oder gedrosselt, während in der Abkühlphase nach dem Zeitpunkt, an dem der Mittelwert des oberen Frequenzbereichs den Mittelwert des unteren Frequenzbereichs übersteigt, die Energiezufuhr wieder aufgenommen oder erhöht wird.

Auch bei Getränkeautomaten wurde bereits der Einsatz von akustischen Methoden in Erwägung gezogen.

Die Druckschrift DE 10 2009 045 069 A1 beschreibt eine Kolbenpumpe als Fördereinrichtung für einen Getränkeautomaten, insbesondere für einen Kaffeevollautomat, mit einem Mikrofon, das ein Anschlagen eines Kolbens der Kolbenpumpe und eine Anschlagslautstärke oder ein hierfür vorgesehenes Ersatzsignal erfasst, einem Mikrocontroller, der die Kolbenpumpe anregt und steuert, und einer Zeitmesseinrichtung, welche eine Zeitspanne zwischen einer Anregung und einem Anschlagen des Kolbens misst, wobei der Mikrocontroller derart ausgebildet ist, dass er aus den von der Zeitmesseinrichtung und dem Mikrofon erfassten Werten ein Fördervolumen der Kolbenpumpe ermittelt.

Die Druckschrift EP 1 707 089 A1 beschreibt ein Verfahren zum Detektieren des Fehlens von Kaffeebohnen in einem Mahlwerk einer Kaffeemaschine, wobei der Pegel und/oder das Spektrum einer durch das Mahlwerk während des Betriebs erzeugten Schwingung gemessen und zur Bestimmung des Entscheids, ob Kaffeebohnen vorhanden sind oder nicht, herangezogen wird.

Schliesslich ist es aus der Druckschrift WO 81/03702 A1 ein generelles analytisches Untersuchungsverfahren zum selbsttätigen Überwachen des Zustandes von Maschinen oder Anlagen während des Betriebes und/oder von Fertigungsprozessen auf der Grundlage der Analyse des Spektrums von Schall bzw. Erschütterungsschwingungen bekannt, die beim Betrieb der Maschine oder Anlage bzw. beim Fertigungsprozess entstehen und die sich bei störungsfreier Soll-Funktion der Maschine oder Anlage bzw. bei störungsfreiem Ablauf des Fertigungsprozesses vom Zustand im Fall einer Störung beliebiger Ursache typischerweise unterscheiden. Dabei werden zunächst Schwingungen erfasst, diese Schwingungen sodann analysiert, indem das Amplitudenbild der erfassten Schwingungen in eine Spektraldarstellung mit Ausweis der in einem oder mehreren Frequenzbändern ermittelten spektralen Leistungsdichtewerte umgewandelt wird, danach die ermittelten Leistungsdichtewerte mit vorgegebenen Leistungsdichtewerten in jedem zu überwachenden Frequenzband verglichen werden und schliesslich beim Abweichen der ermittelten Leistungsdichtewerte von den vorgegebenen abgespeicherten Leistungsdichtewerten Signale ausgelöst werden.

Die bekannten Methoden der akustischen Überwachung und Steuerung bei Getränkebereitern haben sich bisher auf einzelne Aspekte des Betriebsablaufs bzw. einzelne, isolierte Untersysteme wie z.B. die Kaffeemühle oder eine Kolbenpumpe beschränkt. Damit können zwar einzelne Sensoren oder Messwertaufnehmer eingespart werden, jedoch muss für die Auswertung der akustischen Signale zusätzliche Intelligenz bereitgestellt werden, welche die sehr beschränkten Einsparungen auf der Sensorseite zumindest ausgleicht.

### DARSTELLUNG DER ERFINDUNG

Es ist daher eine Aufgabe der Erfindung, ein Verfahren zum Überwachen und/oder Steuern eines Getränkebereiters, insbesondere eines Kaffeevollautomaten, bereitzustellen, welches es erlaubt, mit möglichst einem oder nur wenigen Sensoren eine solche Maschine mit ihren unterschiedlichen Baugruppen, während des Betriebes und den damit verbundenen unterschiedlichen Betriebszuständen, zu überwachen und zu steuern.

Es ist weiterhin eine Aufgabe der Erfindung, einen Getränkebereiter zur Durchführung des Verfahrens anzugeben.

Diese und andere Aufgaben werden durch die Merkmale der Ansprüche 1 und 10 gelöst.

Die Erfindung geht aus von einem Verfahren zum Überwachen und/oder Steuern eines eine Vielzahl von Subsystemen umfassenden Getränkebereiters, insbesondere Kaffeevollautomaten, bei welchem Verfahren die Funktion und/oder Betriebszustände der Subsysteme sensorisch überwacht und die Ergebnisse der Überwachung ggf. für die Steuerung des Betriebsablaufs und/oder Diagnose verwendet werden. Sie ist dadurch gekennzeichnet, dass die Überwachung mehrerer Funktionen und/oder Betriebszustände der Subsysteme durch Erfassung der von den überwachten Subsystemen abgegebenen Geräusche und/oder Körperschwingungen erfolgt.

Eine Ausgestaltung des erfindungsgemässen Verfahrens zeichnet sich dadurch aus, dass die Geräusche durch wenigstens ein Mikrofon erfasst und in einer angeschlossenen Signalverarbeitungseinheit ausgewertet werden.

Insbesondere werden zur Aufnahme der Geräusche die zugehörigen Frequenzspektren und/oder die Schallintensität und/oder die Schallintensität für bestimmte Frequenzbereiche und/oder die Schallintensität für bestimmte Frequenzbereiche in ihrem zeitlichen Verlauf erfasst.

Vorzugsweise werden dabei zur Auswertung die erfassten Frequenzspektren mit in einem Speicher abgelegten Frequenzspektren verglichen werden.

Gemäss einer anderen Ausgestaltung werden mehrere an unterschiedlichen Orten angeordnete Mikrofone verwendet, und die erfassten Geräusche der mehreren Mikrofone gleichzeitig zur Ortung der Geräuschquelle verwendet.

Eine weitere Ausgestaltung des erfindungsgemässen Verfahrens ist dadurch gekennzeichnet, dass der Getränkebereiter ein Kaffeevollautomat ist, welcher eine Kaffeemühle und eine Brüheinheit umfasst, und dass das Mahlen des Kaffees und das Brühen des Kaffeegetränks akustisch überwacht werden.

Darüber hinaus kann der Kaffeevollautomat Mittel zum Bereitstellen von heissem Wasser für den Brühvorgang umfassen, wobei das Erzeugen und/oder Bereitstellen des heissen Wassers für den Brühvorgang akustisch überwacht wird.

Weiterhin kann der Kaffeevollautomat Mittel zum Erzeugen und/oder Bereitstellen von kalter und/oder heisser Milch und/oder Milchschaum umfassen, wobei das Erzeugen und/oder Bereitstellen der Milch bzw. des Milchschaums akustisch überwacht wird.

Der Kaffeevollautomat kann auch einen Auslauf zur Ausgabe des Kaffeegetränks umfassen, wobei die Ausgabe des Kaffeegetränks akustisch überwacht wird.

Auch kann der Kaffeevollautomat einen herausnehmbaren Satzbehälter zur Aufnahme des beim Brühvorgang entstehenden Kaffeesatzes umfassen, wobei das Ausleeren des Satzbehälters akustisch überwacht wird.

Ebenso kann der Kaffeevollautomat einen Lüfter/Ventilator umfassen, wobei die Funktion des Lüfters/Ventilators akustisch überwacht wird.

Schliesslich kann der Kaffeevollautomat ein Netzteil umfassen, wobei die Funktion des Netzteils akustisch überwacht wird.

Eine weitere Ausgestaltung des erfindungsgemässen Verfahrens ist dadurch gekennzeichnet, dass innerhalb des Getränkebereiters bewegliche Teile vorgesehen sind, und dass eine Position der Teile dadurch akustisch überwacht wird, dass bei Erreichen der Position ein auswertbares Geräusch erzeugt wird.

Insbesondere wird zur Erzeugung eines auswertbaren Geräusches ein nach Art eines "Knackfrosches" wirkender Blechstreifen eingesetzt.

Eine noch andere Ausgestaltung des erfindungsgemässen Verfahrens ist dadurch gekennzeichnet, dass innerhalb des Getränkebereiters während des Betriebs Flüssigkeiten, insbesondere Wasser oder Milch, oder Dampf durch verschiedene Leitungen strömen, und dass der Massendurchfluss akustisch bestimmt wird.

Der erfindungsgemässe Getränkebereiter weist eine Vielzahl von Subsystemen für die Zubereitung und Ausgabe von Getränken auf, wobei erste Mittel zur sensorischen Überwachung von Funktion und/oder Betriebszuständen der Subsysteme vorgesehen sind. Er ist dadurch gekennzeichnet, dass die ersten Mittel zur sensorischen Überwachung mehrerer Funktionen und/oder Betriebszustände der Subsysteme zur Erfassung der von den überwachten Subsystemen abgegebenen Geräusche und/oder Körperschwingungen ausgebildet und an eine Signalverarbeitungseinheit angeschlossen sind.

Eine Ausgestaltung des Getränkebereiters nach der Erfindung ist dadurch gekennzeichnet, dass die ersten Mittel zur sensorischen Überwachung mehrerer Funktionen und/oder Betriebszustände der Subsysteme wenigstens ein Mikrofon umfassen.

Insbesondere können mehrere an unterschiedlichen Orten angeordnete Mikrofone vorgesehen und an die Signalverarbeitungseinheit angeschlossen sein.

Eine andere Ausgestaltung ist dadurch gekennzeichnet, dass die Signalverarbeitungseinheit mit einem Speicher verbunden ist.

Eine weitere Ausgestaltung ist dadurch gekennzeichnet, dass der Getränkebereiter ein Kaffeevollautomat ist, welcher eine Kaffeemühle und eine Brüheinheit umfasst, und dass die ersten Mittel zur Erfassung der beim Mahlen des Kaffees und beim Brühen des Kaffeegetränks abgegebenen Geräusche und/oder Körperschwingungen ausgebildet sind.

Insbesondere umfasst der Kaffeevollautomat zweite Mittel zum Bereitstellen von heissem Wasser für den Brühvorgang, wobei die ersten Mittel zur Erfassung der beim Erzeugen und/oder Bereitstellen des heissen Wassers für den Brühvorgang abgegebenen Geräusche und/oder Körperschwingungen ausgebildet sind.

Weiterhin kann der Kaffeevollautomat dritte Mittel zum Erzeugen und/oder Bereitstellen von kalter und/oder heisser Milch und/oder Milchschaum umfassen, wobei die ersten Mittel zur Erfassung der beim Erzeugen und/oder Bereitstellen der Milch bzw. des Milchschaums abgegebenen Geräusche und/oder Körperschwingungen ausgebildet sind.

Eine weitere Ausgestaltung ist dadurch gekennzeichnet, dass innerhalb des Getränkebereiters bewegliche Teile vorgesehen sind, und dass die ersten Mittel vierte Mittel umfassen, die bei Erreichen einer vorgegebenen Position der beweglichen Teile ein auswertbares Geräusch erzeugen.

Insbesondere können die vierten Mittel einen nach Art eines "Knackfrosches" wirkenden Blechstreifen umfassen.

Eine noch andere Ausgestaltung ist dadurch gekennzeichnet, dass innerhalb des Getränkebereiters Leitungen für Flüssigkeiten vorgesehen sind, und dass den Leitungen zur Messung des Massenstroms eine akustisch überwachte Referenzstrecke zugeordnet ist.

### KURZE ERLÄUTERUNG DER FIGUREN

Die Erfindung soll nachfolgend anhand von Ausführungsbeispielen im Zusammenhang mit der Zeichnung näher erläutert werden. Es zeigen:
- Fig. 1: eine perspektivische Aussenansicht eines Kaffeevollautomaten, wie er zur Realisierung der Erfindung geeignet ist;
- Fig. 2: ein Schemabild eines Kaffeevollautomaten gemäss einem Ausführungsbeispiel der Erfindung;
- Fig. 3: ein Ausführungsbeispiel für eine mit einer Referenzstrecke versehene Leitung zur akustischen Messung des Massenstroms;
- Fig. 4: ein Ausführungsbeispiel für einen akustisch arbeitenden Positionssensor nach Art eines "Knackfrosch"-Blechstreifens als Ersatz für einen Mikroschalter; und
- Fig. 5: die schematische Darstellung von Frequenzspektren, wie sie im Rahmen der Erfindung erfasst und ausgewertet werden.

### WEGE ZUR AUSFÜHRUNG DER ERFINDUNG

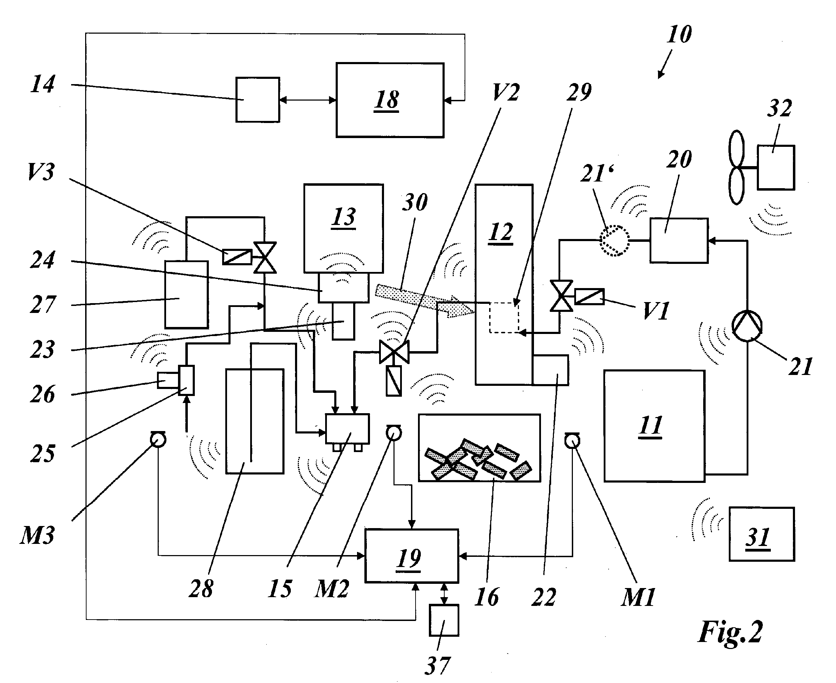

In Fig. 2 ist ein Schemabild eines Kaffeevollautomaten gemäss einem Ausführungsbeispiel der Erfindung wiedergegeben. Der Kaffeevollautomat 10 umfasst eine zentrale Brüheinheit (Brühgruppe) 12 mit einer beispielsweise zwischen zwei beweglichen Kolben gebildeten Brühkammer 29, die zum Füllen mit Kaffeepulver 30 und zum Entleeren des Kaffeesatzes in den darunter angeordneten Satzbehälter 16 geöffnet werden kann. Die Brüheinheit 12 kann beispielsweise so aufgebaut sein, wie das in der Druckschrift WO 2009/056426 A1 beschrieben und dargestellt ist. Für die Bewegung der Kolben und den Auswurfmechanismus für den Kaffeesatz ist ein Antriebsmotor 22 vorgesehen, der über eine Spindel den Kolben- und Auswurfmechanismus antreibt.

Die Brühkammer 29 wird beim Brühen des Kaffees mit heissem Wasser aus einem Boiler 20 versorgt, in den seinerseits mittels einer Pumpe 21 Wasser aus einem (üblicherweise herausnehmbaren) Wassertank 11 (oder bei überwiegend gewerblich genutzten Festwassermaschinen aus der angeschlossenen Wasserversorgung) zugeführt wird. Zwischen dem Boiler 20 und der Brühkammer 29 bzw. der Brüheinheit 12 ist in diesem Beispiel ein steuerbares Ventil V1 angeordnet, das - ebenso wie andere Untersysteme der Maschine - von einer zentralen Steuereinheit 18 gesteuert wird (die zugehörigen Steuerleitungen sind in Fig. 2 der Übersichtlichkeit halber weggelassen). Zwischen dem Boiler 20 und der Brühkammer 29 bzw. der Brüheinheit 12 kann aber auch eine Espressopumpe 21' vorgesehen sein, die das heisse Wasser mit erhöhtem Druck durch die Brühkammer 29 presst.

Der in der Brühkammer 29 aufgebrühte Kaffee wird über ein weiteres steuerbares Ventil V2 zu einem zentralen Auslauf 15 geleitet und dort an einen darunter stehenden Behälter (Tasse, Becher oder dgl.) ausgegeben. Das zum Brühen notwendige Kaffeepulver wird in einer Kaffeemühle 24 gemahlen, die von einem Antriebsmotor 23 angetrieben wird und eine vorbestimmte Menge Kaffeebohnen aus einem darüber angeordneten Bohnenbehälter 13 entnimmt. Die Kaffeemühle kann beispielsweise den in der Druckschrift WO 2011/020771 A1 beschriebenen Aufbau haben. Von der Kaffeemühle 24 gelangt das Kaffeepulver 30 über eine Rutsche oder dgl. in die (dafür geöffnete) Brühkammer 29.

Zur automatischen Erzeugung von Milchschaum, wie er beispielsweise für einen Cappuccino benötigt wird, ist im Auslauf (oder davor) ein Milchschäumer angeordnet, der aus einem Dampferzeuger 27 über ein weiteres steuerbares Ventil V3 mit Dampf versorgt wird. Die Poren im Milchschaum werden durch Luft gebildet, die in diesem Fall mittels einer durch einen Antriebsmotor 26 angetriebenen Luftpumpe 25 aktiv in den Dampferzeuger 27 eingespiesen wird. Der mit Luft angereicherte Dampf aus dem Dampferzeuger 27 saugt dann z.B. mittels eines Venturieffektes Milch aus einem Milchbehälter 28 an und verwirbelt diesen zu Milchschaum, der über den Auslauf 15 ausgegeben wird. Ein Milchschäumer der genannten Art (bei dem die Luft allerdings nach dem Dampferzeuger zugegeben wird) ist aus der Druckschrift DE 44 45 436 A1 bekannt.

In dem Kaffeevollautomaten 10 kann zusätzlich ein Lüfter/Ventilator 32 angeordnet sein, der zur Abfuhr der beim Betrieb entstehenden Hitze eingesetzt wird. Für die Stromversorgung der Maschinensysteme ist ein Netzteil 31 vorgesehen (die Stromversorgungsleitungen vom Netzteil zu den einzelnen Abnehmern sind in Fig. 2 der Übersichtlichkeit wegen weggelassen). Die Steuereinheit 18 ist mit einer Bedien- und Anzeigeeinheit 14 verbunden, die Eingaben zur Steuerung der Maschine ermöglicht und Betriebszustände der Maschine anzeigt.

Zur akustischen Überwachung des Kaffeevollautomaten 10 sind nun ein oder mehrere Mikrofone M1-M3 an geeigneten Stellen innerhalb (oder auch ausserhalb) der Maschine angeordnet, um Betriebsgeräusche der unterschiedlichsten Art und Frequenz aufzunehmen und zur Auswertung an einer Signalverarbeitungseinheit 19 weiterzuleiten. Unter Mikrofonen werden in diesem Zusammenhang auch Schwingungsaufnehmer verstanden, die den Körperschall bzw. Vibrationen an bestimmten Stellen der Maschine erfassen können.

Während des Betriebes des Kaffeevollautomaten 10 werden von verschiedenen Untersystemen der Maschine (Antriebsmotoren, Mahlwerk, Brüheinheit, Schalter, Ventile, Boiler, Wasser- und Dampfleitungen etc.) charakteristische, zeitlich veränderliche Schallspektren bzw. Frequenzspektren und deren zeitlicher Verlauf, also Spektrogramme, erzeugt, die bei Normalbetrieb eine wiedererkennbare Struktur aufweisen, bei Abweichungen vom Normalbetrieb diese Struktur jedoch verändern oder ganz verlieren. In Fig. 2 sind diese Geräusche durch punktiert gezeichnete Schallwellenmuster angedeutet. Ein typisches Beispiel für solche Geräusche ist das Aufheulen des Antriebsmotors 23 der Kaffeemühle 24, wenn keine Kaffeebohnen mehr vorhanden sind. Ein anders typisches Beispiel ist ein stark verändertes Pumpen- und/oder Leitungsgeräusch, wenn eine Pumpe mangels Flüssigkeit leer läuft.

Mittels eines oder mehrerer Mikrofone M1-M3 werden nun die Betriebsgeräusche der Maschine fortlaufend erfasst und nach Frequenz, Frequenzspektrum, Intensität, Schalldruck, Schallleistung usw. in der Signalverarbeitungseinheit 19 ausgewertet. Hierbei lassen sich Frequenzen und Intensität dem Betrieb einzelner Baugruppen zuordnen wie z.B. das Schalten der Ventile V1-V3, das Laufen von Ventilatoren 32 usw.

Durch einen ständigen Soll/Ist-Vergleich der Geräusche (Spektren) oder durch Abspeichern des Ist-Spektrogramms und anschliessendem Vergleich mit einem Soll-Spektrogramm lassen sich insbesondere folgende Baugruppen/Bauteile einer Kaffeemaschine bzw. eines Kaffeevollautomaten überwachen:
- Mühlen, insbesondere im Hinblick auf eine Mühlen-Leererkennung oder das Auftreten von Fremdkörpern zwischen den Mahlscheiben der Kaffeemühle;
- Milchversorgung, insbesondere im Hinblick auf eine Milch-Leererkennung oder die Milchschaumqualität
- Antrieb der Brüheinheit, insbesondere im Hinblick auf Drehzahl, Schwergängigkeit, Verschleiß des Spindelmechanismus (Spindelmutter), Lagerschaden;
- Ventile, insbesondere im Hinblick auf deren Schalten;
- Pumpen, insbesondere eine Espressopumpe;
- Netzteil;
- Lüfter/Ventilatoren;
- Kessel-/Wassersystem, insbesondere im Hinblick auf eine Verkalkung.

Durch den Soll/Ist-Vergleich der Geräusche beziehungsweise des gesamten Geräuschbildes lässt sich z.B. ermitteln, in wie weit sich typische Frequenzen oder Frequenzspektren auf der Frequenzachse verschieben/verändern und/oder (in der Amplitude bzw. Schallintensität) lauter oder leiser werden.

Eine Steuerung der einzelnen Baugruppen und Diagnostik kann beispielsweise wie folgt aussehen:

### Kaffeemühle 24:

Die Dosierung der Mahlmenge erfolgt im Stand der Technik üblicherweise über eine Zeitsteuerung und einem Stromsensor oder eine Lichtschranke, um eine Leermeldung auszugeben.

Mit einem Akustiksensor bzw. Mikrofon M1-M3 kann über eine Erfassung des Mahlgeräusches die Mahlzeit gesteuert werden und durch Zunahme der Frequenz ein Leerwerden der Mühle 24 erkannt werden, da hierbei die Mahlscheiben anfangen schneller zu drehen. Weiterhin kann ein beginnendes Verstopfen der Mühle 24 durch einen zu feinen Mahlgrad erkannt werden, da in diesem Fall die Drehzahl absinkt.

Wird die Kaffeemühle 24 durch einen in den Kaffeebohnen vorhandenen Fremdkörper (Stein oder dgl.) blockiert, ist dies ebenfalls erkennbar, da dann nur noch ein Motorbrummen des Antriebsmotors 23 zu vernehmen ist und kein Mahlgeräusch. Es ist aber auch denkbar, dass das Einziehen des Fremdkörpers in die Mahlscheiben und der schlagartige Stopp der Mahlscheiben als einzelnes Geräuschereignis erkenn- und auswertbar sind.

### Milch: (vollautomatisches Schäumen)

Im Stand der Technik erfolgt eine Milch-Leererkennung über spezielle Füllstandssensoren in und an den Milchbehältern (siehe z.B. die EP 2 461 298 A1).

Bei der akustischen Überwachung gemäss der Erfindung erfolgt die Milch-Leererkennung mittels Akustiksensor über das Ansauggeräusch. Dies ändert sich deutlich, wenn anstatt reiner Milchflüssigkeit ein Milch/Luftgemisch aus dem Milchbehälter 28 angesaugt wird.

Mit der akustischen Überwachung kann aber nicht nur das Vorhandensein von Milch überwacht werden, sondern auch die Milchschaumqualität: Bei zu grobem Schaum tritt durch den Dampf, der fürs Aufschäumen benötigt wird, ein "Sprotzeln" und Spritzen am Auslauf 15 auf, das akustisch erfasst werden kann und sich von den Geräuschen bei Ausgabe von feinporigem Schaum deutlich unterscheidet.

Es kann aber auch akustisch erkannt werden, ob Schaum oder Milch am Auslauf 15 ausgegeben wird: Beim Übergang vom Milchschaum zu Milch verändert sich das Aufschäumgeräusch zu einem "pfeifenden, quietschenden" Geräusch.

Es kann akustisch sogar unterschieden werden, ob die Ausgabetemperatur des Milchschaums zu heiß oder zu kalt ist, weil die Geräusche mit Änderung der Temperatur leiser oder lauter werden.

Die Ausgabetemperatur für Milch/Milchschaum wird meist über ein Klemmventil am vom Milchbehälter 28 kommenden Ansaugschlauch eingestellt (für ein Klemmventil an der Milchleitung siehe z.B. die EP 1 374 748 A2). Je stärker der Milchschlauch geklemmt wird, umso mehr Dampf pro Milcheinheit kommt mit der Milch in Kontakt, was zu einer höheren Temperatur führt. Zum Ansaugen darf der Schlauch nicht geklemmt sein; das Klemmventil wird dann zeitgesteuert zugefahren. Die Zeit ist so bemessen das auch im Worst-Case-Fall der Schlauch mit Milch gefüllt ist. Das heißt, in den meisten Fällen kann das Klemmventil deutlich früher betätigt werden. Der Übergang vom ersten Ansaugen zum mit Milch befülltem Schlauch und Milchschäumer ist deutlich zu hören und kann somit als Trigger zum Betätigen des Klemmventils benutzt werden.

Ist der Milchbehälter 28 innerhalb der Maschine 10 angeordnet und nur über eine zu öffnende Tür zugänglich, kann eine Kontrolle, ob Milch nachgefüllt wurde, durch Erfassung der Geräusche beim Öffnen und Schliessen der Tür erfolgen und/oder durch Erfassung des Einfüllgeräusches der Milch.

Auch kann ein für die Maschine 10 vorgesehener Reinigungsvorgang mit einem speziellen Milchreiniger sowie Heißwasser und Kaltwasser, akustisch überwacht werden, weil die Reinigung beim eigentlichen Reinigungsvorgang und anschließenden Spülen ein charakteristisches Geräuschbild erzeugt.

### Milch: (manuelles Schäumen - Steamer)

Neben dem automatischen Aufschäumen von Milch in einem eingebauten Milchschäumer, wie er bei dem Kaffeevollautomaten 10 aus Fig. 2 vorgesehen ist, kann auch zusätzlich aussen an der Maschine eine Vorrichtung zum manuellen Milchaufschäumen vorgesehen sein, wie dies beispielsweise in der Druckschrift EP 2 110 060 A1 oder der EP 2 025 270 A2 beschrieben ist. Das Schäumen von Milch in einem Gefäß erfolgt dabei mit einem Dampfrohr, welches mit Schäumdüsen versehen ist und einen Temperatursensor hat, der bei einer vorgewählten Temperatur die Dampfzufuhr abstellt. Der Benutzer achtet nur darauf, dass das Dampfrohr in der Milch ist und startet die Dampfzufuhr.

Mit einem Akustiksensor gemäss der Erfindung kann der Temperatursensor entfallen, da das Aufschäumgeräusch in charakteristischer Weise abhängig von der erreichten Temperatur ist.

Darüber hinaus kann die Funktion des manuellen Aufschäumens generell akustisch überwacht werden. So kann z.B. anhand der erzeugten Geräusche festgestellt werden, ob Dampf oder ein Dampf/Luftgemisch aus dem Dampfrohr kommt, oder ob das Dampfrohr ganz in die Milch eingetaucht, oder nur halb, oder gar nicht.

Aus dieser akustischen Überwachung können dann neben direkten Eingriffen über die Maschinensteuerung (Steuerungseinheit 18) entsprechende Warnungen oder Anweisungen abgeleitet werden im Sinne einer Benutzerführung.

### Brüheinheit 12:

Im Rahmen der Erfindung wird dabei auf eine Erfassung der Antriebsgeräusche der Brüheinheit 12 gesetzt. Da in der Regel Spindelantriebe mit Elektromotor (Antriebsmotor 22) verwendet werden (siehe die oben genannte WO 2009/056426 A1), kann daraus die Drehzahl und damit die Verfahr- und Stellgeschwindigkeit ermittelt werden.

Weiterhin können bestimmte Positionen wie der Endanschlag der Kolben oben oder unten, die zur Normierung dienen und im Stand der Technik über Positionsschalter abgefragt werden, sowie spezielle Ereignisse wie das Einfahren in eine Dichtung und damit das Verschließen des Brühraumes bzw. der Brühkammer 29, akustisch erkannt und ausgewertet werden.

Zusätzlich kann ein Verschleiß, eine Schwergängigkeit, ein Trockenlauf, Schäden in Lager, Führungen, Spindelmutter akustisch erkannt werden. Das heißt insbesondere ein hörbares Quietschen oder Reiben bei Trockenlauf bzw. ein unrunder "mühsamer" Lauf bei Schwergängigkeit. Sofern es sich um beim Brühvorgang auftretende Geräusche, insbesondere Fliessgeräusche, handelt, ist es zweckmässig und vorteilhaft, diese direkt an der Brüheinheit 12 zu messen, und zwar entweder durch ein dort positioniertes Mikrofon (Luftschall) oder durch die durch Körperkontakt mit der Brüheinheit 12 erfassten Schwingungen (Körperschall).

### Satzbehälter 16:

Die Überwachung des Satzkastens bzw. Satzbehälters 16, der die aus der Brüheinheit 12 ausgeworfenen Kaffesatz-Presslinge aufnimmt, erfolgt im Stand der Technik beispielsweise über Türschalter (sofern eine Tür geöffnet werden muss) und Satzkastenpräsenzschalter.

Die Geräusche "Tür auf/zu" und Entnehmen und Einsetzen des Satzkastens bzw. Satzbehälters 16 sind ebenfalls deutlich zu erkennen. Ein Einsetzen eines leeren Behälters erzeugt ein deutlich anderes Geräusch als das eines vollen Behälters. Eine akustische Überwachung, ob der Behälter wirklich entleert wurde, ist damit möglich.

Im Stand der Technik benötigt man demgegenüber dazu eine spezielle Sensorik, wie kapazitive Sensoren oder - bei minimalem Aufwand - eine Zeitüberwachung mit der Logik, dass, wenn sich der Behälter nur kurz (z.B. kleiner 1 Minute) außerhalb der Maschine befunden hat, keine Entleerung stattgefunden haben kann.

### Ventile V1-V3:

Beim Schalten der Ventile V1-V3, die an den unterschiedlichsten Stellen des Kaffeevollautomaten 10 eingesetzt sein können, entstehen typische Klackgeräusche durch Anschlagen des Plungers (Schaltelement) in den jeweiligen Endpositionen. Durch akustische Erfassung dieser Geräusche und ihre Auswertung lassen sich fluidische Zustände der Maschine (Fliessen oder Nichtfliessen von Wasser, Milch, Luft) in den verschiedensten Leitungen bestimmen und bei der Ablaufsteuerung oder Fehlerdiagnose berücksichtigen.

Darüber hinaus können Strömungsgeräusche in bestimmten Leitungsabschnitten, Ventilen oder Drosselstellen Rückschlüsse auf die Fließgeschwindigkeit erlauben. Hierzu ist es zweckmässig und vorteilhaft, akustische Messungen direkt am jeweiligen Bauteil vorzunehmen.

### Espressopumpe 21':

Eine Überwachung, ob die Espressopumpe 21' im eingeschalteten Zustand auch tatsächlich fördert, ist mit einer Geräuschauswertung möglich, ebenso wie eine Erkennung des Betriebzustandes, ob eine hohe Fördermenge bei niedrigem Druck (Pumpe brummt) oder eine geringe Fördermenge bei hohem Druck vorliegt (Pumpe hat ruhigen Lauf). Dies gibt Hinweise darauf, ob eine Leitung oder ein Ventil verstopft ist oder das Kaffeemehl zu stark verpresst oder zu fein vermahlen ist, was wiederum Einfluss auf die Getränkequalität hat.

### Durchflussmengenmesser:

Die in der Maschine geförderten Wassermengen werden im Stand der Technik in der Regel über teure und komplizierte Flügelzellenmessgeräte gemessen und dosiert (siehe zum Beispiel die EP 1 955 624 A1).

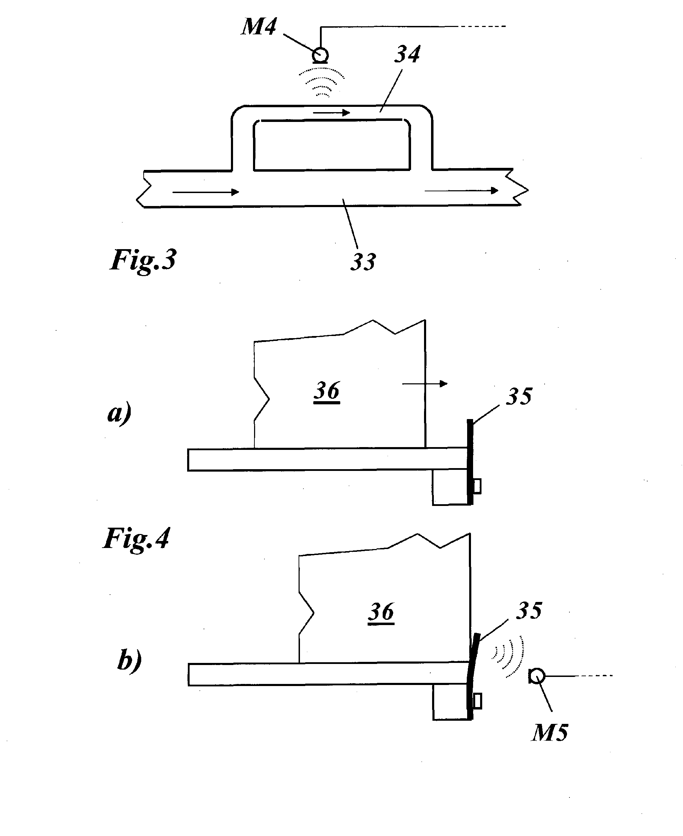

Im Rahmen der Erfindung ist es möglich, gemäss Fig. 3 auf einfache Weise mittels eines Mikrofons M4 den Massenfluss über das Strömungsgeräusch in einer Referenzstrecke 34 zu erfassen. Die Referenzstrecke 34 kann dabei entweder parallel zur zu überwachenden Leitung 33 (wie in Fig. 3) oder auch als Teilstück derselben ausgebildet sein. Durch eine spezielle Ausbildung der Referenzstrecke 34 (z.B. den Einsatz von Turbulatoren) kann dabei eine eindeutige Zuordnung von Massenstrom und Geräuschspektrum erzeugt werden.

### Lüfter/Ventilator 32:

Wenn in der Maschine ein Lüfter/Ventilator 32 zum Abführen der beim Betrieb entstehenden Wärme vorhanden ist, kann durch eine akustische Überwachung festgestellt werden, ob der Lüfter ausgefallen ist oder läuft, aber verschmutzt ist, oder einen Lagerschaden hat und in naher Zukunft ausfallen wird. Wird ein solcher Ausfall oder Schaden festgestellt, kann eine entsprechende Meldung an der Bedien- und Anzeigeeinheit 14 direkt ausgegeben werden, oder - wie bei der Feststellung von Fehlfunktionen generell - im Rahmen einer Fernüberwachung an eine entfernte Überwachungs- und Diagnoseeinrichtung übermittelt werden.

### Luftpumpe 25:

Die Luftpumpe 25 wird neben dem im Dampferzeuger 27 erzeugten Dampf zum Aufschäumen von Milch benötigt, aber auch zum Leerblasen von Produktleitungen nach der Getränkeausgabe. Auch in diesem Fall ist eine akustische Überwachung möglich, die angibt, ob die Luftpumpe 25 bzw. deren Antriebsmotor 26 läuft und Luft fördert.

Eine Sensorik hierfür ist aus dem Stand der Technik nicht bekannt.

Wie im Falle der Flüssigkeiten (Milch, Wasser) ist auch bei der Luft eine Steuerung der Fördermenge auf der Grundlage einer Geräuschauswertung möglich und in eine allgemeine akustische Überwachung und Steuerung integrierbar.

### Kessel-/Wassersystem:

Das Aufheizen und Nachheizen im Boiler 20 bzw. Dampferzeuger 27 erzeugt Siede- und Kochgeräusche des Wassers, die hörbar sind, und durch akustische Auswertung benutzt werden können, um die Aufheizphasen zu überwachen und zu steuern. Desgleichen kann das Entlüften von Inertgasen, die beim Erhitzen entstehen können, akustisch überwacht werden.

In diesem Zusammenhang kann zur Überwachung auch der Umstand ausgenutzt werden, dass bei zunehmender Verkalkung des Kessels und des darin befindlichen Heizkörpers deutlich andere Kochgeräusche beim Heizen entstehen, bis hin zu Knack- und Schlaggeräuschen durch Dampf- und Kavitationsblasen.

Eine solche Überwachung kann mit Vorteil für einen entsprechenden Entkalkungshinweis an den Kunden auf der Bedien- und Anzeigeeinheit 14 genutzt werden.

Wenn am Kessel ein Sicherheitsventil vorgesehen ist, kann ein Abblasen des Kessels wegen Übertemperatur akustisch detektiert werden und kann zur Sicherheitsabschaltung der Maschine genutzt werden.

### Netzteil 31:

Kaffeevollautomaten verfügen üblicherweise über ein Netzteil 31 zur Stromversorgung unterschiedlicher Untersysteme (Antriebsmotoren, Ventile etc.). Ein aus dem Rahmen fallendes Brummen des Netzteils 31 kann im Rahmen der Erfindung akustisch erfasst und ausgewertet werden, um den Belastungszustand des Netzteils 31 besonders hinsichtlich einer gefährlichen Grenzbelastung zu erkennen.

### Maschinenreinigung:

Ein Kaffeevollautomat und insbesondere die Milch führenden Systeme müssen aus Gründen der Funktionserhaltung und Hygiene regelmässig gereinigt werden. Hierzu kann beispielsweise eine spezielle Klappe auf der Oberseite der Maschine vorgesehen sein, durch die der Maschine eine Reinigungstablette per Hand zugeführt werden kann (siehe z.B. die DE 203 12 094 U1).

Mit Sensorik wird im Stand der Technik das Öffnen der Reinigungsklappe überwacht und mit Positions- und Stromsensoren wird versucht, beim Zufahren der Brüheinheit 12 festzustellen, ob eine Reinigungstablette zwischen oberem und unterem Kolben liegt.

Im Rahmen der Erfindung lässt sich über die Akustik feststellen, ob die Klappe geöffnet und geschlossen wird und dazwischen das Einwurfgeräusch der Tablette kommt, oder bei Einfüllen von Reinigungspulver ein für das Pulver charakteristisches Rieselgeräusch zu hören ist.

### Überwachung Stand-by-Betrieb:

Währen unterschiedlicher Betriebsphasen der Maschine sind unterschiedliche Baugruppen (Brüheinheit, Boiler, Milchschäumer etc.) aktiv und erzeugen die für sie charakteristischen Geräusche. Durch eine räumlich verteilte Anordnung mehrerer Akustiksensoren bzw. Mikrofone (M1-M3 in Fig. 2) können durch gleichzeitige Auswertung der erfassten Geräusche die einzelnen aktiven Baugruppen innerhalb der Maschine lokalisiert werden. Arbeiten nur die vorgesehenen Baugruppen, erfolgt keine Meldung. Kann bei einer Abweichung vom normalen Geräuschbild lokalisiert werden, welche Baugruppe dies verursachen könnte, kann daraus eine Baugruppen-spezifische Fehlermeldung abgeleitet und angezeigt werden.

Weiterhin können auch ein geplatzter oder undichter Schlauch, undichte Anschlüsse, undichte Ausgabeventile, an Hand von Fließ- oder Tropfgeräuschen erkannt und lokalisiert werden.

Darüber hinaus kann aufgrund von der Norm abweichender Geräusche eine ungewollte, unberechtigte Bedienung /Fehlbedienung erkannt werden und die Maschine gesperrt oder ein Alarmsignal ausgegeben werden.

Bei Maschinen im Selbstbedienungsbetrieb ist dies ein wichtiges und gewünschtes Feature, um auch Vandalismus oder Diebstahl von Kaffee oder abnehmbaren Bauteilen zu verhindern.

Diese Art der akustischen Überwachung ist auch anwendbar bei Zusatzgeräten wie Münzprüfern oder Münzwechslers, die mit Bargeld arbeiten und nach Bezahlung die Kaffeemaschine und das bezahlte Produkt freigeben, und daher Angriffen besonders leicht ausgesetzt sind.

### Sonstiges:

In den einzelnen Baugruppen wurden gemäss den bisherigen Erläuterungen mehrfach Positions- oder Endschalter für bewegte Elemente der Maschine durch die Geräuscherfassung ersetzt. Treten bei diesen oder anderen Anwendungen keine Geräusche in den jeweiligen Positionen auf, kann hierzu folgende einfache akustische Lösung angewendet werden (Fig. 4a,b):

Anstatt eines Mikroschalters wird ein einfacher, entsprechend geprägter Blechstreifen 35 angebracht (Fig. 4a), der bei Betätigung durch ein bewegliches Element 36, z.B. den eingeschobenen Satzbehälter, ein Knackgeräusch (wie beim bekannten "Knackfrosch") erzeugt (Fig. 4b), das wiederum durch eine Mikrofon M5 akustisch erfasst und ausgewertet werden kann. Bei unterschiedlicher (akustischer) Auslegung der Blechstreifen 35 entstehen unterschiedliche Knackgeräusche, die dann den unterschiedlichen Schaltern zugeordnet werden können. Vorteil sind hier sehr günstige Herstellungskosten, eine rein mechanische Funktionsweise ohne Elektrik und Stromversorgung sowie keine einzelnen Steuerungseingänge für jeden Schalter.

Das akustische Erkennen von Verschleiß, der spezifisch bei den einzelnen Baugruppen (Brüheinheit, Ventile, Pumpen etc.) aufgeführt wird, lässt sich auch allgemein auf die gesamte Maschine übertragen. Dies gilt insbesondere auch für Quietsch-, Reib-, Brumm- oder Klappergeräusche, die von Anbauteilen erzeugt werden oder nicht direkt zugeordnet werden können.

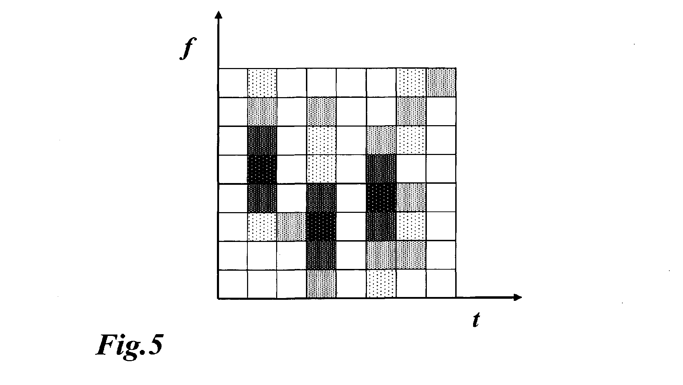

Die Auswertung erfolgt gemäss Fig. 5 über Intensität und Frequenz f. Die zeitliche Entwicklung der Geräuschspektren wird durch 3D-Messfelder gemäss Fig. 5 berücksichtigt, bei denen Intensität (Farbe der Felder) zu Frequenz f bzw. Frequenzspektren über der Zeit t aufgetragen sind.

Wenn die Frequenzspektren für den ungestörten Normalbetrieb in einem Speicher 37 abgelegt sind, kann durch Vergleich der neu erfassten akustischen Spektren mit den abgespeicherten sofort eine signifikante Abweichung erkannt, ausgewertet und zur Anzeige gebracht und/oder zur Steuerung des Betriebsablaufs verwendet werden.

Diese Messergebnisse können aber auch noch zu einer weiteren Möglichkeit der akustischen Auswertung eingesetzt werden. Bisher ist nur die Anwendung zur Steuerung des Betriebsablaufes erläutert worden. Weiter kann es aber auch sinnvoll und vorteilhaft sein, die Auswertung für Diagnosezwecke und Überwachung zu verwenden. Das heisst, bei bestimmten Betriebsabläufen wie Reinigung oder Entkalkung, die zyklisch ablaufen und bei denen Geräusche meist seriell ablaufen, wird eine Diagnose bzw. Überprüfung der Komponenten durchgeführt. Weiter wäre auch möglich, hierzu ein spezielles Diagnoseprogramm durch die Bedienperson oder einen Kundendiensttechniker zu starten, bei dem die Komponenten einzeln oder in Kombination angesteuert und überprüft werden. Bei einer Anwendung durch den Kundendiensttechniker wäre es auch alternativ denkbar, dass die Vorrichtung zur Diagnose gar nicht in der Maschine integriert ist sondern die Maschine mittels Diagnoseprogramm von einem externen Computer (z.B. Laptop) aus gesteuert und ausgewertet wird. Als Mikrofon könnte her sogar das Laptopmikrofon oder ein extern adaptiertes Mikrofon dienen.

Die Diagnosefunktion kann zur Unterstützung der Inbetriebnahme des Gerätes oder Fehlersuche dienen. Der Begriff Diagnose wird hier bewusst verwendet, da mit dem erfindungsgemässen Verfahren nicht nur Fehler erkannt werden können, wie z.B., dass ein Durchflussmesser (DFM) keine Impulse mehr gibt bzw. sich nicht mehr dreht, sondern auch systematisch nach der Ursache gesucht werden kann.

### Die Vorteile der Erfindung sind:

- Einsparung mehrerer, zum Teil teurer, Sensoren.
- Überwachung mehrerer Baugruppen mit einer Sensorik.
- Steuerung der Baugruppen.
- permanente Überwachung des Betriebszustandes.
- Frühzeitiges Erkennung eines Ereignisses oder Fehlers.

### Bezugszeichenliste

- 10: Kaffeevollautomat
- 11: Wassertank
- 12: Brüheinheit
- 13: Bohnenbehälter
- 14: Bedien- und Anzeigeeinheit
- 15: Auslauf
- 16: Satzbehälter
- 17: Tropfschale
- 18: Steuereinheit
- 19: Signalverarbeitungseinheit
- 20: Boiler
- 21: Pumpe
- 21': Espressopumpe
- 22: Antriebsmotor (Brüheinheit)
- 23: Antriebsmotor (Kaffeemühle)
- 24: Kaffeemühle
- 25: Luftpumpe
- 26: Antriebsmotor (Luftpumpe)
- 27: Dampferzeuger
- 28: Milchbehälter
- 29: Brühkammer
- 30: Kaffeepulver
- 31: Netzteil
- 32: Lüfter/Ventilator
- 33: Leitung
- 34: Referenzstrecke
- 35: Blechstreifen
- 36: bewegliches Element
- 37: Speicher
- M1-M5: Mikrofon (allg. Schall- oder Vibrationsaufnehmer)
- V1-V3: Ventil

## Patentansprüche

1. Verfahren zum Überwachen und/oder Steuern eines eine Vielzahl von Subsystemen (12, 13, 16, 20, 21, 21', 24, 25, 27, 28, 31, 32) umfassenden Getränkebereiters, insbesondere Kaffeevollautomaten (10), bei welchem Verfahren die Funktion und/oder Betriebszustände der Subsysteme (12, 13, 16, 20, 21, 21', 24, 25, 27, 28, 31, 32) sensorisch überwacht und die Ergebnisse der Überwachung ggf. für die Steuerung des Betriebsablaufs und/oder Diagnose verwendet werden, **dadurch gekennzeichnet, dass** die Überwachung mehrerer Funktionen und/oder Betriebszustände der Subsysteme (12, 13, 16, 20, 21, 21', 24, 25, 27, 28, 31, 32) durch Erfassung der von den überwachten Subsystemen abgegebenen Geräusche und/oder Körperschwingungen erfolgt.

2. Verfahren nach Anspruch 1, **dadurch gekennzeichnet, dass** die Geräusche durch wenigstens ein Mikrofon (M1-M5) erfasst und in einer angeschlossenen Signalverarbeitungseinheit (19) ausgewertet werden, dass zur Erfassung der Geräusche die zugehörigen Frequenzspektren (A(f)) und/oder die Schallintensität und/oder die Schallintensität für bestimmte Frequenzbereiche und/oder die Schallintensität für bestimmte Frequenzbereiche in ihrem zeitlichen Verlauf erfasst werden, und dass zur Auswertung die erfassten Frequenzspektren (A(f)) bzw. Schallintensitäten mit in einem Speicher (37) abgelegten Frequenzspektren bzw. Schallintensitäten verglichen werden.

3. Verfahren nach Anspruch 2, **dadurch gekennzeichnet, dass** mehrere an unterschiedlichen Orten angeordnete Mikrofone (M1-M3) verwendet werden, und dass die erfassten Geräusche der mehreren Mikrofone (M1-M3) gleichzeitig zur Ortung der Geräuschquelle verwendet werden.

4. Verfahren nach Anspruch 1, **dadurch gekennzeichnet, dass** der Getränkebereiter ein Kaffeevollautomat (10) ist, welcher eine Kaffeemühle (24) und eine Brüheinheit (12) umfasst, dass das Mahlen des Kaffees und das Brühen des Kaffeegetränks akustisch überwacht werden, dass weiterhin der Kaffeevollautomat (10) Mittel (20, 21, V1) zum Bereitstellen von heissem Wasser für den Brühvorgang umfasst, und dass das Erzeugen und/oder Bereitstellen des heissen Wassers für den Brühvorgang akustisch überwacht wird.

5. Verfahren nach Anspruch 4, **dadurch gekennzeichnet, dass** der Kaffeevollautomat (10) Mittel (15, 23-28, V3) zum Erzeugen und/oder Bereitstellen von kalter und/oder heisser Milch und/oder Milchschaum umfasst, und dass das Erzeugen und/oder Bereitstellen der Milch bzw. des Milchschaums akustisch überwacht wird.

6. Verfahren nach Anspruch 4, **dadurch gekennzeichnet, dass** der Kaffeevollautomat (10) einen Auslauf (15) zur Ausgabe des Kaffeegetränks umfasst, und dass die Ausgabe des Kaffeegetränks akustisch überwacht wird.

7. Verfahren nach Anspruch 4, **dadurch gekennzeichnet, dass** der Kaffeevollautomat (10) einen herausnehmbaren Satzbehälter (16) zur Aufnahme des beim Brühvorgang entstehenden Kaffeesatzes und/oder einen Lüfter/Ventilator (32) und/oder ein Netzteil (31) umfasst, und dass das Ausleeren des Satzbehälters (16) bzw. die Funktion des Lüfters/Ventilators (32) bzw. die Funktion des Netzteils (31) akustisch überwacht wird.

8. Verfahren nach Anspruch 1, **dadurch gekennzeichnet, dass** innerhalb des Getränkebereiters (10) bewegliche Teile vorgesehen sind, und dass eine Position der Teile dadurch akustisch überwacht wird, dass bei Erreichen der Position ein auswertbares Geräusch erzeugt wird, wobei insbesondere zur Erzeugung eines auswertbaren Geräusches ein nach Art eines "Knackfrosches" wirkender Blechstreifen (35) eingesetzt wird.

9. Verfahren nach Anspruch 1, **dadurch gekennzeichnet, dass** innerhalb des Getränkebereiters (10) während des Betriebs Flüssigkeiten, insbesondere Wasser oder Milch, oder Dampf durch verschiedene Leitungen (33) strömen, und dass der Massendurchfluss akustisch bestimmt wird.

10. Getränkebereiter (10) mit einer Vielzahl von Subsystemen (12, 13, 16, 20, 21, 21', 24, 25, 27, 28, 31, 32) für die Zubereitung und Ausgabe von Getränken, welcher Getränkebereiter (10) erste Mittel zur sensorischen Überwachung von Funktion und/oder Betriebszuständen der Subsysteme (12, 13, 16, 20, 21, 21', 24, 25, 27, 28, 31, 32) aufweist, **dadurch gekennzeichnet, dass** die ersten Mittel (M1-M5) zur sensorischen Überwachung mehrerer Funktionen und/oder Betriebszustände der Subsysteme (12, 13, 16, 20, 21, 21', 24, 25, 27, 28, 31, 32) zur Erfassung der von den überwachten Subsystemen abgegebenen Geräusche und/oder Körperschwingungen ausgebildet und an eine Signalverarbeitungseinheit (19) angeschlossen sind.

11. Getränkebereiter nach Anspruch 10, **dadurch gekennzeichnet, dass** die ersten Mittel (M1-M5) zur sensorischen Überwachung mehrerer Funktionen und/oder Betriebszustände der Subsysteme (12, 13, 16, 20, 21, 21', 24, 25, 27, 28, 31, 32) wenigstens ein Mikrofon (M1-M5) umfassen, und dass vorzugsweise mehrere an unterschiedlichen Orten angeordnete Mikrofone (M1-M3) vorgesehen und an die Signalverarbeitungseinheit (19) angeschlossen sind.

12. Getränkebereiter nach Anspruch 10, **dadurch gekennzeichnet, dass** die Signalverarbeitungseinheit (19) mit einem Speicher (37) verbunden ist.

13. Getränkebereiter nach Anspruch 10, **dadurch gekennzeichnet, dass** der Getränkebereiter ein Kaffeevollautomat (10) ist, welcher eine Kaffeemühle (24) und eine Brüheinheit (12) umfasst, und dass die ersten Mittel (M1-M5) zur Erfassung der beim Mahlen des Kaffees und beim Brühen des Kaffeegetränks abgegebenen Geräusche und/oder Körperschwingungen ausgebildet sind.

14. Getränkebereiter nach Anspruch 13, **dadurch gekennzeichnet, dass** der Kaffeevollautomat (10) zweite Mittel (20, 21, V1) zum Bereitstellen von heissem Wasser für den Brühvorgang umfasst, und dass die ersten Mittel (M1-M5) zur Erfassung der beim Erzeugen und/oder Bereitstellen des heissen Wassers für den Brühvorgang abgegebenen Geräusche und/oder Körperschwingungen ausgebildet sind.

15. Getränkebereiter nach Anspruch 14, **dadurch gekennzeichnet, dass** der Kaffeevollautomat (10) dritte Mittel (15, 23-28, V3) zum Erzeugen und/oder Bereitstellen von kalter und/oder heisser Milch und/oder Milchschaum umfasst, und dass die ersten Mittel (M1-M5) zur Erfassung der beim Erzeugen und/oder Bereitstellen der Milch bzw. des Milchschaums abgegebenen Geräusche und/oder Körperschwingungen ausgebildet sind.

16. Getränkebereiter nach Anspruch 10, **dadurch gekennzeichnet, dass** innerhalb des Getränkebereiters (10) bewegliche Teile vorgesehen sind, und dass die ersten Mittel vierte Mittel (35) umfassen, die bei Erreichen einer vorgegebenen Position der beweglichen Teile ein auswertbares Geräusch erzeugen, wobei die vierten Mittel insbesondere einen nach Art eines "Knackfrosches" wirkenden Blechstreifen (35) umfassen.

17. Getränkebereiter nach Anspruch 10, **dadurch gekennzeichnet, dass** innerhalb des Getränkebereiters (10) Leitungen (33) für Flüssigkeiten vorgesehen sind, und dass den Leitungen (33) zur Messung des Massenstroms eine akustisch überwachte Referenzstrecke (34) zugeordnet ist.

## Claims

1. Method of monitoring and/or controlling a beverage-making machine, more particularly a fully automated coffee machine (10), comprising a plurality of sub-systems (12, 13, 16, 20, 21, 21', 24, 25, 28, 31, 32), in which method the function and operating statuses of the sub-systems (12, 13, 16, 20, 21, 21', 24, 25, 28, 31, 32) are monitored by sensor and the results of the monitoring are used, if necessary, for controlling the operating procedure, **characterised in that** the monitoring of several functions and/or operating status of the sub-systems (12, 13, 16, 20, 21, 21', 24, 25, 28, 31, 32) takes place through recording sounds and/or bulk vibrations emitted by the monitored sub-systems.

2. Method according to claim 1 **characterised in that** the sounds are recorded by at least one microphone (M1-M5) and evaluated in a connected signal processing unit (19), **in that** to record the sounds the associated frequency spectra (A(f)) and/or the sound intensity and/or the sound intensity for certain frequency ranges and/or the sound intensity for certain frequencies are recorded in terms of their duration and **in that** for evaluation the recorded frequency spectra (A(f))/sound intensities are compared with frequency spectra/sound intensities stored in a memory (37).

3. Method according to claim 2 **characterised in that** several microphones (M1-M3) arranged at various locations are used, and **in that** the recorded sounds of the several microphones (M1-M3) are simultaneously used to localise the source of the sound.

4. Method according to claim 1 **characterised in that** the beverage- making machine is a fully automated coffee machine (10) which comprises a coffee grinder (24) and a brewing unit (12), **in that** the grinding of the coffee and the brewing of the coffee beverage are acoustically monitored, **in that** the fully automated coffee machine (10) also comprises means (20, 21, V1) for providing hot water for the brewing procedure and **in that** the production and/or provision of the hot water for the brewing procedure is acoustically monitored.

5. Method according to claim 4 **characterised in that** the fully automated coffee machine (10) comprises means (15, 23-28, V3) for the production and/or provision of cold and/or hot milk and/or milk foam and that the production and/or provision of the milk and/or the milk foam is acoustically monitored.

6. Method according to claim 4 **characterised in that** the fully automated coffee machine (10) comprises an outlet (15) for dispensing the coffee beverage and that the dispensing of the coffee beverage is acoustically monitored.

7. Method according to claim 4 **characterised in that** the fully automated coffee machine (10) comprises a removable dregs container (16) for collecting the coffee dregs produced during the brewing procedures and/or a fan/ventilator (32) and a power unit (31) and **in that** the emptying of the dregs container (16) and/or the function of the fan/ventilator (32) and/or the function of the power unit (31) is acoustically monitored.

8. Method according to claim 1 **characterised in that** within the beverage-making machine (10) moving components are provided and **in that** a position of the components is acoustically monitored, that on reaching the position an evaluable sound is generated, wherein more particularly for generating an evaluable sound a metal strip (35) acting in the manner of a clicker is used.

9. Method according to claim 1 **characterised in that** during operation, liquids, more particularly water or milk, or steam flow through various pipes (33) within the beverage-making machine (10) and that the mass flow is acoustically determined.

10. Beverage-making machine (10) with a plurality of sub-systems (12, 13, 16, 20, 21, 21', 24, 25, 28, 31, 32) for the preparation and dispensing of beverages, said beverage-making machine (10) comprising first means for the sensory monitoring of the function and/or operating statuses of the sub-systems (12, 13, 16, 20, 21, 21', 24, 25, 28, 31, 32) **characterised in that** the first means (M1-M5) for the sensory monitoring of several functions and operating statuses of sub-systems (12, 13, 16, 20, 21, 21', 24, 25, 28, 31, 32) are designed for recording the sounds and/or bulk vibrations emitted by the monitored sub-systems and are connected to a signal processing unit (19).

11. Beverage-making machine according to claim 10 **characterised in that** the first means (M1-M5) for the sensory monitoring of several functions and/or operating statuses of sub-systems (12, 13, 16, 20, 21, 21', 24, 25, 28, 31, 32) include at least one microphone (M1-M3), and preferably multiple microphones placed in various locations are connected to the signal processing unit (19).

12. Beverage-making machine according to claim 10 **characterised in that** the signal processing unit (19) is connected to a memory (37).

13. Beverage making machine according to claim 10 **characterised in that** the beverage making machine is a fully automated coffee machine (10) which comprises a coffee grinder (24) and a brewing unit (12) and **in that** the first means (M1-M5) are designed for recording the sounds and/or bulk vibration emitted during grinding of the coffee and during the brewing of the coffee beverage

14. Beverage-making machine according to claim 13 **characterised in that** the fully automated coffee making machine (10) comprises second means (20, 21, V1) for providing hot water for the brewing procedure and that the first means (M1-M5) are designed for recording the sounds and/or bulk vibrations emitted during the production and/or provision of the hot water for the brewing procedure.

15. Beverage-making machine according to claim 14 **characterised in that** the fully automated coffee machine (10) comprises third means (15, 23-28, V3) for producing and/or providing cold and/or hot milk and/or milk foam and **in that** the first means (M1-M5) are designed for recording the sounds and/or bulk vibrations emitted during the production and/or provision of the milk and/or the milk foam.

16. Beverage-making machine according to claim 10 **characterised in that** moving components are provided within the beverage-making machine (10) and **in that** the first means comprise fourth means (35) which when the moving parts reach a predefined position generate an evaluable sound, wherein the fourth means more particularly comprise a metal strip (35) which acts in the manner of a clicker.

17. Beverage-making machine according to claim 10 **characterised in that** within the beverage-making machine (10) pipes (33) for liquids are provided and **in that** in order to measure the mass flow the pipes (33) have an acoustically monitored reference section (34).

## Revendications

1. Procédé pour surveiller et/ou commander un distributeur de boissons, notamment un automate à café (10), comprenant une multiplicité de sous-systèmes (12, 13, 16, 20, 21, 21', 24, 25, 27, 28, 31, 32), procédé selon lequel les fonctions et/ou les états de fonctionnement des sous-systèmes (12, 13, 16, 20, 21, 21', 24, 25, 27, 28, 31, 32) sont surveillés par capteurs et les résultats de la surveillance sont utilisés le cas échéant pour la commande du fonctionnement et/ou pour le diagnostic, **caractérisé en ce que** la surveillance de plusieurs fonctions et/ou états de fonctionnement des sous-systèmes (12, 13, 16, 20, 21, 21', 24, 25, 27, 28, 31, 32) s'effectue par détection des bruits et/ou vibrations produits par les sous-systèmes surveillés.

2. Procédé selon la revendication 1, **caractérisé en ce qu'**on détecte les bruits avec au moins un microphone (M1-M5) et on les évalue dans une unité de traitement de signaux (19) raccordée, **en ce que**, pour la détection des bruits, on détecte les allures temporelles des spectres de fréquences (A(f)) associés et/ou de l'intensité sonore et/ou de l'intensité sonore pour certaines plages de fréquence et **en ce que**, pour l'évaluation, on compare les spectres de fréquences (A(f)) détectés ou les intensités sonores détectées à des spectres de fréquences ou intensités sonores enregistrés dans une mémoire (37).

3. Procédé selon la revendication 2, **caractérisé en ce qu'**on utilise plusieurs microphones (M1-M3) agencés en différents endroits et **en ce qu'**on utilise les bruits détectés des différents microphones (M1-M3) simultanément pour la localisation de la source du bruit.

4. Procédé selon la revendication 1, **caractérisé en ce que** le distributeur de boissons est un automate à café (10) qui comprend un moulin à café (24) et une unité d'infusion (12), **en ce que** la mouture du café et l'infusion de la boisson à base de café sont surveillées de façon acoustique, en outre **en ce que** l'automate à café (10) comprend des moyens (20, 21, V1) pour fournir de l'eau chaude en vue de l'infusion et **en ce que** la production et/ou la fourniture de l'eau chaude pour l'infusion sont surveillées de façon acoustique.

5. Procédé selon la revendication 4, **caractérisé en ce que** l'automate à café (10) comprend des moyens (15, 23-28, V3) pour produire et/ou fournir du lait froid et/ou chaud et/ou de la mousse de lait froide et/ou chaude et **en ce que** la production et/ou la fourniture du lait ou de la mousse de lait sont surveillées de façon acoustique.

6. Procédé selon la revendication 4, **caractérisé en ce que** l'automate à café (10) comprend une sortie (15) pour délivrer la boisson à base de café et **en ce que** la délivrance de la boisson à base de café est surveillée de façon acoustique.

7. Procédé selon la revendication 4, **caractérisé en ce que** l'automate à café (10) comprend un récipient à doses (16), amovible qui sert à recevoir la dose de café moulu produite lors de l'infusion, et/ou un ventilateur (32) et/ou une alimentation électrique (31) et **en ce que** le vidage du récipient à doses (16) ou le fonctionnement du ventilateur (32) ou le fonctionnement de l'alimentation électrique (31) sont surveillés de façon acoustique.

8. Procédé selon la revendication 1, **caractérisé en ce que** des pièces mobiles sont prévues à l'intérieur du distributeur de boissons (10) et **en ce qu'**une position des pièces est surveillée de façon acoustique du fait que, lorsque les pièces atteignent leur position, un bruit évaluable est produit, une lame de tôle (35) qui agit comme un cliquet aussi appelé « clicker » étant notamment utilisée pour produire un bruit évaluable.

9. Procédé selon la revendication 1, **caractérisé en ce que** des fluides, notamment de l'eau ou du lait ou de la vapeur, s'écoulent dans différentes conduites (33) à l'intérieur du distributeur de boissons (10) pendant le fonctionnement et **en ce que** le débit est déterminé de façon acoustique.

10. Distributeur de boissons (10) avec une multiplicité de sous-systèmes (12, 13, 16, 20, 21, 21', 24, 25, 27, 28, 31, 32) pour la préparation et la fourniture de boissons, lequel distributeur de boissons (10) comporte des premiers moyens pour la surveillance par capteurs de fonctions et/ou états de fonctionnement des sous-systèmes (12, 13, 16, 20, 21, 21', 24, 25, 27, 28, 31, 32), **caractérisé en ce que** les premiers moyens (M1-M5) pour la surveillance par capteurs de plusieurs fonctions et/ou états de fonctionnement des sous-systèmes (12, 13, 16, 20, 21, 21', 24, 25, 27, 28, 31, 32) sont conçus pour la détection des bruits et/ou vibrations produits par les sous-systèmes surveillés et sont raccordés à une unité de traitement de signaux (19).

11. Distributeur de boissons selon la revendication 10, **caractérisé en ce que** les premiers moyens (M1-M5) pour la surveillance par capteurs de plusieurs fonctions et/ou états de fonctionnement des sous-systèmes (12, 13, 16, 20, 21, 21', 24, 25, 27, 28, 31, 32) comprennent au moins un microphone (M1-M5) et **en ce que** de préférence plusieurs microphones (M1-M3) agencés en différents endroits sont prévus et sont raccordés à l'unité de traitement de signaux (19).

12. Distributeur de boissons selon la revendication 10, **caractérisé en ce que** l'unité de traitement de signaux (19) est reliée à une mémoire (37).

13. Distributeur de boissons selon la revendication 10, **caractérisé en ce que** le distributeur de boissons est un automate à café (10) qui comprend un moulin à café (24) et une unité d'infusion (12) et **en ce que** les premiers moyens (M1-M5) sont conçus pour la détection des bruits et/ou vibrations produits lors de la mouture du café et lors de l'infusion de la boisson à base de café.

14. Distributeur de boissons selon la revendication 13, **caractérisé en ce que** l'automate à café (10) comprend des deuxièmes moyens (20, 21, V1) pour fournir de l'eau chaude pour l'infusion et **en ce que** les premiers moyens (M1 à M5) sont conçus pour la détection des bruits et/ou vibrations produits lors de la production et/ou de la fourniture de l'eau chaude pour l'infusion.

15. Distributeur de boissons selon la revendication 14, **caractérisé en ce que** l'automate à café (10) comprend des troisièmes moyens (15, 23-28, V3) pour produire et/ou fournir du lait froid et/ou chaud et/ou de la mousse de lait froide et/ou chaude et **en ce que** les premiers moyens (M1-M5) sont conçus pour la détection des bruits et/ou vibrations produits lors de la production et/ou de la fourniture du lait ou de la mousse de lait.

16. Distributeur de boissons selon la revendication 10, **caractérisé en ce que** des pièces mobiles sont prévues à l'intérieur du distributeur de boissons (10) et **en ce que** les premiers moyens comprennent des quatrièmes moyens (35) qui, lorsque les pièces mobiles atteignent une position prédéterminée, produisent un bruit évaluable, les quatrièmes moyens comprenant notamment une lame de tôle (35) qui agit comme un cliquet aussi appelé « clicker ».

17. Distributeur de boissons selon la revendication 10, **caractérisé en ce que** des conduites (33) pour des fluides sont prévues à l'intérieur du distributeur de boissons (10) et **en ce qu'**une voie de référence (34) surveillée de façon acoustique est associée aux conduites (33) pour la mesure du débit.
